# EUROPÄISCHE PATENTSCHRIFT

(11) **EP 1 322 533 B1**
(45) Veröffentlichungstag und Bekanntmachung des Hinweises auf die Patenterteilung: **14.04.2004**
(21) Anmeldenummer: 01960056.8
(22) Anmeldetag: 12.09.2001
(51) Int. Cl.: B65G 45/22, B65G 27/02

(54) **SELBSTREINIGENDER SCHWINGUNGSFÖRDERER ZUM ENTGRATEN, ENTSTAUBEN UND HOCHFÖRDERN VON KLEINTEILEN**
SELF-CLEANING OSCILLATING CONVEYOR FOR DEBURRING, DEDUSTING AND THE ONWARD TRANSPORT OF SMALL PARTS
CONVOYEUR OSCILLANT AUTONETTOYANT DESTINE A EBAVURER, DEPOUSSIERER, ET LEVER DES ELEMENTS DE PETITE TAILLE

(30) Priorität: 04.10.2000 CH 195400
(43) Veröffentlichungstag der Anmeldung: 02.07.2003
(73) Patentinhaber: Krämer AG Bassersdorf, 8303 Bassersdorf (CH)
(72) Erfinder: KRÄMER, Paul, CH-8309 Birchwil (CH)
(74) Vertreter: Felber, Josef
(86) Internationale Anmeldenummer: PCT/CH2001/000549
(87) Internationale Veröffentlichungsnummer: WO 2002/028751

(56) Entgegenhaltungen:
- EP-A- 0 733 564
- DE-A- 3 931 027

## Beschreibung

Die vorliegende Erfindung betrifft einen selbstreinigenden Schwingungsförderer zum Entgraten, Entstauben und Hochfördern von Kleinteilen, insbesondere von Pillen und Tabletten. Schwingungsförderer ohne Selbstreinigungseinrichtung sind bekannt und werden im Produktionsprozess von Tabletten unmittelbar den Tablettenpressen nachgeschaltet, um die Tabletten hochzufördern und diese dabei gleichzeitig zu entgraten und zu entstauben, sodass sie anschliessend einer Verpackungsmaschine zugeführt werden können. Solche Schwingungsförderer weisen eine schraubenlinienförmige Bahn aus einem Edelstahlkännel auf, welcher sich um die Aussenwand eines stehenden Rohres emporwindet und mittels einer elektromagnetischen Schwingungseinheit mitsamt diesem Rohr in eine Vibration mit horizontaler und vertikaler Komponente versetzt werden kann. Um die Aussenseite des schraubenlinienförmigen Förderkanals ist ein Mantelrohr aus Stahl oder Kunststoff gestülpt. Das Mantelrohr weist der Länge nach oftmals eine Ausnehmung über etwa einen Drittel des Mantelrohrumfanges auf, in die ein Plexiglasfenster eingesetzt ist, sodass die Förderung der Kleinteile beobachtet werden kann. Infolge der Vibration des Kännels hüpfen die Tabletten auf der schraubenlinienförmigen Bahn aufwärts. Mittels einer Absaugvorrichtung kann der Staub aus dem Bereich über der schraubenlinienförmigen Bahn zwischen dem zentralen Rohr und dem Mantelrohr durch das zentrale Rohr abgesaugt werden, das hierzu mit Schlitzen versehen ist oder perforiert ist.

Der Nachteil eines solchen Schwingungsförderers ist, dass der beim Entgraten entstehende Staub zwar weitgehend abgesaugt wird, gewisse Verunreinigungen aber an den Wänden des zentralen Rohrs und des Mantelrohrs sowie am Förderkanal des Schwingungsförderers haften bleiben. Sollen nacheinander unterschiedliche Kleinteile mit dem Gerät gefördert werden, also etwa Tabletten verschiedener Sorten mit verschiedenen Wirkstoffen, so müssen die Innenwände des Schwingungsförderers vor jeder Umstellung auf eine neue Tablettensorte gründlich gereinigt werden. Bisher erfolgt diese Reinigung von Hand. Zunächst muss das Mantelrohr entfernt werden, um den Zugang zum Förderkanal und zum zentralen Rohr freizugeben. Alle verstaubten Teile können dann mit einem feuchten Lappen abgerieben werden, namentlich der perforierte Förderkanal die Aussenseite des zentralen Rohres sowie auch der Boden und Deckel des Förderraumes. Schliesslich wird auch die Innenseite des demontierten Mantelrohres gereinigt. Dann werden alle Teile getrocknet und anschliessend wieder zusammengebaut. Diese Reinigungsarbeit ist aufwendig und mühsam. Ausserdem fällt das Gerät während der Reinigungsarbeiten aus und man verliert Zeit in der Weiterverarbeitung der hergestellten Kleinteile oder Tabletten. Bis die Reinigung vollzogen ist und die Umstellung auf eine etwa neue Tablettensorte bereit ist, müssen andere Anlagenteile im Produktions- und Verpackungsprozess stillstehen.

Aus diesen Gründen ist es die Aufgabe der vorliegenden Erfindung, einen selbstreinigenden Schwingungsförderer zu schaffen, sodass eine Demontage des Gerätes erübrigt wird und eine sorgfältige, gründliche und das Gerät schonende Reinigung ohne Handarbeit automatisch erfolgt.

Diese Aufgabe wird gelöst von einem selbstreinigenden Schwingungsförderer zum Entgraten, Entstauben und Hochfördern von Kleinteilen, insbesondere von Pillen und Tabletten, mit einem vertikalen Rohr und einem darum schraubenlinienförmig nach oben gewundenen Förderkanal mit zugehöriger elektromagnetischer Schwingungseinheit, sowie den Förderkanal von aussen umfassendem Mantelrohr, der sich dadurch auszeichnet, dass der Raum zwischen dem vertikalen Rohr und dem Mantelrohr mit mehreren, das vertikale Rohr von innen oder das Mantelrohr von aussen durchsetzenden Düsen mit einem flüssigen Waschmittel mittels einer zugehörigen Förderpumpe unter Druck bespritzbar ist, und der Raum auf seiner Unterseite einen Sammelteller und einen Sammelkanal mit Ablauf aufweist, und dass das Innere des Schwingungsförderers zum Trocknen entweder durch Anschluss eines Föhns mit Warmluft durchströmbar ist oder nach Verschliessen aller Zu- und Abläufe durch Anschluss einer Saugpumpe unter ein Teilvakuum setzbar ist.

Eine vorteilhafte Ausführung eines solchen selbstreinigenden Schwingungsförders ist den Figuren gezeigt, anhand welcher er in der nachfolgenden Beschreibung im einzelnen erläutert wird.

Es zeigt:
- Figur 1:: Den Schwingungsförderer mit Selbstreinigungseinrichtung von vorne gesehen;
- Figur 2:: Den Schwingungsförderer mit Selbstreinigungseinrichtung von der Seite her gesehen;
- Figur 3:: Einen Ausschnitt von zwei miteinander zu verbindenden Rohrabschnitten eines Mantelrohres.

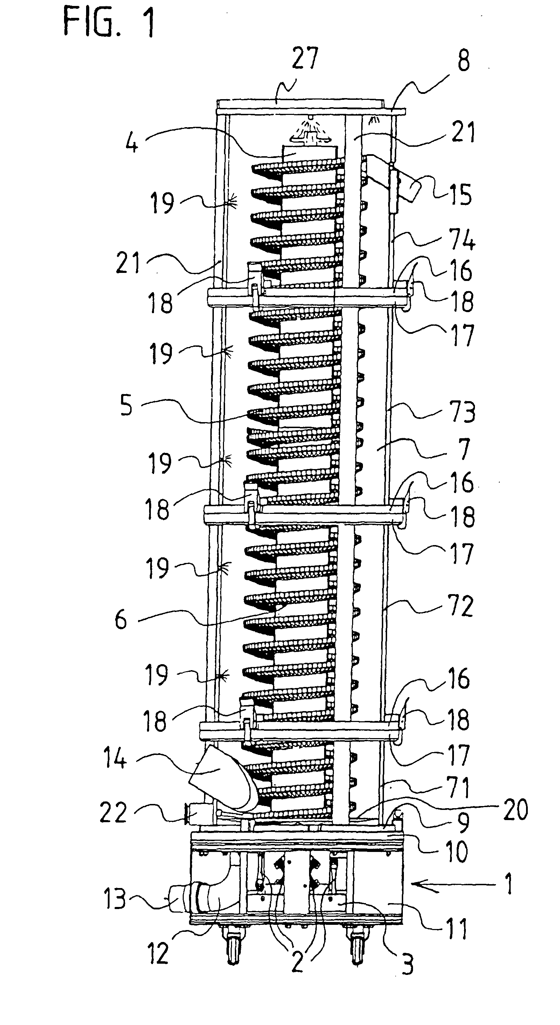

In Figur 1 ist der selbstreinigende Schwingungsförderer von vorne her gesehen dargestellt. Unten sieht man die Schwingungseinheit 1, die aus mehreren Blattfederpaketen 2 besteht, die schräg zur Hochachse des Schwingungsförderes verlaufen und eine hier nicht einsehbare Grundplatte mit der Gegenschwingplatte 3 verbinden. Die Schwingungseinheit weist weiter einen zwischen den Blattfederpaketen 2 unten an der Grundplatte angebauten Elektromagneten auf. Dieser dient zur Anregung der Schwingung zwischen der Grundplatte und den darauf aufgebauten Teilen des Schwingungsförderes einerseits und der Gegenschwingplatte 3 andrerseits. Auf die Grundplatte ist ein zentrales Rohr 4 aufgebaut und um dieses herum ist schraubenlinienförmig ein Förderkanal 5 angebaut. Das Rohr 4 und der Förderkanal 5 werden zusammen mit der Grundplatte in Schwingung bzw. Vibration versetzt, während alle restlichen Teile des Schwingungsförderers im Betrieb ruhig bleiben. Die Kleinteile werden infolge der induzierten Schwingung auf der schraubenlinienförmige Bahn 5, welche sich mit ihrem inneren Rand 6 längs der Aussenseite des als Trägerrohr wirkenden zentralen Rohres 4 um dieses emporwindet, nach oben gefördert. Die Bahn 5 besteht vorteilhaft aus perforiertem Chromstahl und bildet eine Rinne, indem sie in der Mitte im Querschnitt einen Knick aufweist. Durch diese Massnahme wird sichergestellt, dass die Tabletten mehrheitlich in einer liegenden Lage befördert werden. Selbst wenn einzelne Tabletten infolge der Vibrationen zuweilen in eine aufrechte Lage springen, so gelangen sie wegen dieser Rinnenform innert kurzer Zeit wieder in eine liegende Lage. Ausserdem wird durch diesen Knick sichergestellt, dass die Tabletten auf der Bahn niemals verklemmen. Über das Trägerrohr 4 und die auf seiner Aussenseite sich aufwärts windende Bahn 5 ist ein Mantelrohr 7 gestülpt, welches hier aus Plexiglas besteht und so Einblick auf die Bahn 5 gewährt. Das obere Ende des Mantelrohres 7 ist dichtend von einem Deckel 8 verschlossen. Unten ist das Mantelrohr 7 mit einem Flansch 9 ausgerüstet und dieser ist dicht auf einen Mündungsring 10 aufgesetzt. Der Mündungsring 10 seinerseits liegt dicht auf dem oberen Rand des Gehäuses 11 auf. Aus dem Bereich innerhalb des zentralen Rohres 4 führt ein Absaugrohr 12 mit Mündungsstutzen 13 durch die Grundplatte und hernach durch das Gehäuse 11 nach aussen. Über dem Anfang der Bahn 5 ist eine Einschüttgosse 14 durch das Mantelrohr 7 hindurchgeführt und oben, wo die Bahn 5 endet, wird das Mantelrohr 7 von einer Ausschüttgosse 15 durchsetzt. Das Mantelrohr 7 besteht hier aus vier Rohrabschnitten 71-74, die mittels endseitiger Flansche 16,17 zusammengesetzt sind und mittels Spannschnallen 18, die verteilt um den Flanschenumfang angeordnet sind, zusammengespannt sind.

Zur Erzielung einer Selbstreinigung ist nun der Raum zwischen dem vertikalen Rohr 4 und dem Mantelrohr 7 mit mehreren, entweder das vertikale Rohr 4 von innen oder das Mantelrohr 7 von aussen durchsetzenden Düsen 19 bespritzbar. Hierzu wird ein geeignetes flüssiges Waschmittel eingesetzt, das mittels einer zugehörigen Förderpumpe unter Druck über diese Düsen 19 eingespritzt wird. Die Flüssigkeit rinnt hernach nach unten auf einen Sammelteller 20, der unterhalb des Förderkanals 5 angeordnet ist, rinnt aussen über dessen Rand in einen ringförmigen Auffangkanal und von da durch einen nicht eingezeichneten Ablauf im Sammelkanal nach aussen. In der hier gezeigten und bevorzugten Ausführung sind die Düsen 19 auf der Innenseite des Mantelrohres radial angeordnet und es wird von aussen nach innen gespritzt. Hierzu sind längs auf das Plexiglas-Mantelrohr 7 und verteilt über dessen Umfang drei Halbrohre 21 aus Plexiglas dichtend auf die Aussenseite des Mantelrohres 7 aufgesetzt. Vorteilhaft werden diese Plexiglashalbrohre 21 auf die Aussenseite des Mantelrohrs 7 aufgeklebt. Eine ganze Reihe von Düsen 19 ist längs jedes Halbrohres 21 von der Innenseite des Mantelrohres 7 her in dieses eingeschraubt, sodass die Düsen 19 mit dem Innenraum des jeweiligen Halbrohres 21 kommunizieren und somit aus dem Inneren dieser Halbrohre 21 durch diese Düsen 19 Reinigungsflüssigkeit in den Raum innerhalb des Mantelrohres 7 gespritzt werden kann. Wenigstens eines der Halbrohre 21 ist mit einem Zufuhrstutzen 22 ausgerüstet, an welchen ein Druckschlauch zur Einspeisung der Reinigungsflüssigkeit anschliessbar ist. Die verbrauchte Reinigungsflüssigkeit fliesst über einen hier nicht eingezeichneten Ablauf ab.

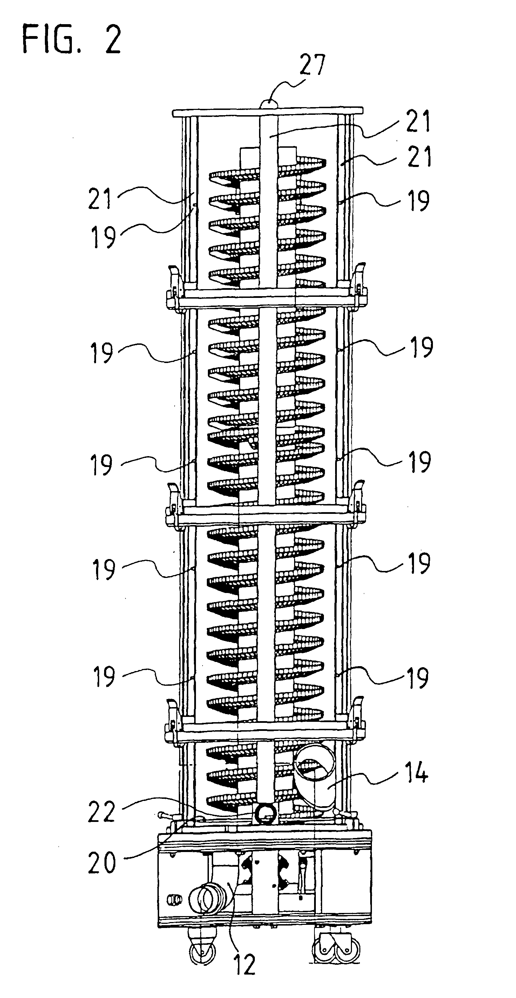

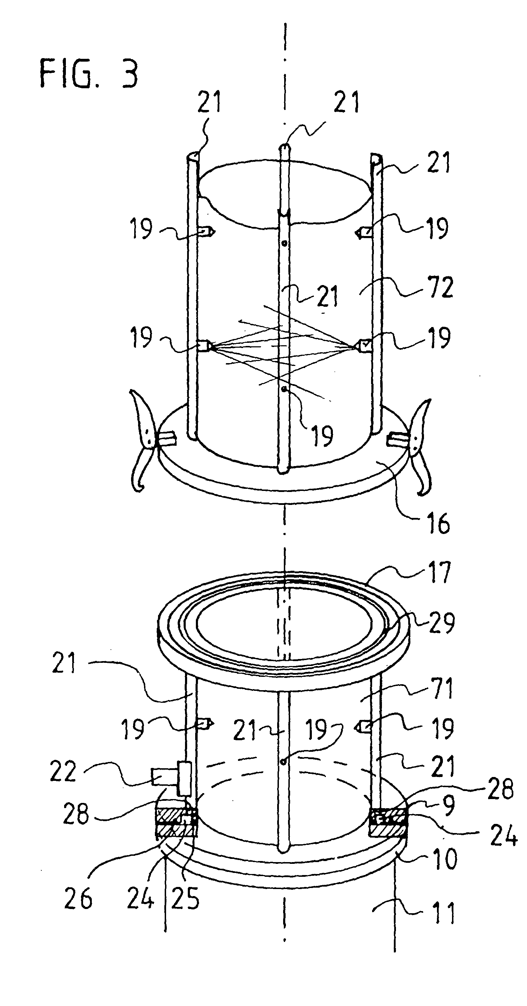

Die Figur 2 zeigt diesen selbstreinigenden Schwingungsförderer von der in Figur 1 linken Seite her gesehen. Man sieht die drei um den Umfang des Mantelrohres verteilt aufgeklebten Halbrohre 21 mit den Düsen 19, sowie den Zufuhrstutzen 22 zum Anschluss des Druckschlauches. Ferner sieht man die Einschüttgosse 14 und das Absaugrohr 12. Damit die Führung der Reinigungsflüssigkeit ab dem Druckschlauch besser verständlich wird, ist diese Flüssigkeitsführung anhand der Figur 3 weiter erklärt.

Die Figur 3 zeigt hierzu zwei aufeinander zu stülpende Abschnitte 71,72 eines Plexiglas-Mantelrohres 7, welches im gezeigten Beispiel mit vier um den Umfang verteilt aufgeklebten Halbrohren 21 versehen ist. Der unterste Abschnitt 71 des Mantelrohres 7 weist unten einen Flansch 9 auf. Dieser untere Flansch 9 wird auf einen Mündungsring 10 aufgesetzt, der fest auf den oberen Rand des Gehäuses 11 aufgebaut ist, in welchem die Schwingungseinheit untergebracht ist. Aus dem Flansch 9 ist von der Unterseite her eine Kreisnut 24 ausgenommen, wie man das auf den beiden Seiten, wo die Flansche 9,10 im Querschnitt gezeichnet sind, sieht. Die Kreisnut 24 ist mittels zweier O-Ringe 25,26, die beidseits der Kreisnut 24 verlaufen, gegen aussen und innen abgedichtet. Axial verlaufende Bohrungen 28, welche sich in der Verlängerung der Halbrohrinnenräume erstrecken, durchsetzen den Flansch 9 und schaffen somit eine Verbindung zwischen der Kreisnut 24 und dem Inneren dieser Halbrohre 21. Am einen Halbrohr 21 ist ein Zufuhrstutzen 22 angebaut. Wird nun Reinigungsflüssigkeit durch diesen Stutzen 22 in dieses eine Halbrohr 21 gepumpt, so fliesst die Reinigungsflüssigkeit aus diesem durch die Bohrung 28 im Flansch 9 in die Kreisnut 24 und erreicht durch die weiteren Bohrungen 28 durch den Flansch 9 auch die anderen Halbrohre 21. Der Druck im ganzen System breitet sich allseitig gleich aus, sodass schliesslich alle Düsen 19 von allen Halbrohren 21 mit dem gleichen Druck beaufschlagt werden. Der oben auf den Mantelrohrabschnitt 71 aufzusetzende nächste Mantelrohrabschnitt 72 weist einen Flansch 16 auf, der auf den Flansch 17 passt, in dessen Oberseite wiederum eine Kreisnut 29 ausgenommen ist, von der aus gleichermassen wie am Flansch 9 Bohrungen durch den Flansch 17 in die Halbrohre 21 münden. Die Kreisnut 29 ist gegen innen und aussen mittels je eines O-Ringes abgedichtet. Der Flansch 16 des Abschnittes 72 wird auf den Flansch 17 aufgesetzt und mittels mehrerer Spannschallen 18 mit diesem dichtend verspannt. Vom Innern des Mantelrohres 71,72 aus sind Düsen 19 in die Mantelrohrwand eingeschraubt, hier in M6-Gewinde. Diese Düsen kommunizieren sodann mit dem Innern der dicht aufgesetzten Halbrohre 21. Vorteilhaft werden Rotationsdüsen eingesetzt, welche einen drehbaren Düsenkopf aufweisen, der wenigstens eine Mündung schräg zur allgemeinen Düsenachse aufweist. Unter dem Druck der durchgepumpten Flüssigkeit werden die Düsenköpfe in Rotation versetzt, sodass der Flüssigkeitsstrahl einen Kegelmantel beschreibt, wie in der Zeichnung angedeutet. Damit wird sichergestellt, dass alle Teile zwischen Mantelrohr 7 und zentralem Rohr 4 des Schwingungsförderers mit Druck angespritzt werden, also sowohl die ganze Mantelrohrinnenseite, die ganze Aussenseite des zentralen Rohres wie auch alle Seiten des Förderkanals 5. Wie in Figur 1 gezeigt, kann ein Halbrohr 21 auch mit einem oben auf dem abdichtenden Deckel 8 in gleicher Weise aufgeklebten Halbrohr 27 verbunden sein. Dann können von unten auch Düsen in den Deckel 8 eingeschraubt sein, die dann vom Innern des Halbrohres 27 versorgt werden, das über dem Deckel 8 angeordnet ist.

Wenn also eine bestimmte Sorte von Tabletten gefördert wurde, die Staubrückstände im Schwingungsförderer hinterliess und eine neue Sorte gefördert werden soll, so wird das Innere des Schwingungsförderers zunächst gründlich gewaschen, indem Reinigungsflüssigkeit in der beschriebenen Weise auf einem Druck von ca. 2 bar und einer Temperatur von etwa 70°C eingespritzt wird. Bei Bedarf können auch höhere Drucke und Temperaturen in Frage kommen, je nach dem verwendeten Reinigungsmittel, das aufgrund der Art der geförderten Kleinteile ausgewählt wird. Die Flüssigkeit erzielt dank ihres allseitigen Aufschlagens unter Druck eine hervorragende Abreinigung aller Flächen im Innern des Schwingungsförderers. Das Schmutzwasser rinnt nach unten, fliesst über den Rand des Sammeltellers 20 nach unten in einen ringförmig unter dem Sammeltellerrand angeordneten Auffangkanal und von dort über einen Ablauf nach aussen.

In einer alternativen Ausführung können die Düsen aber auch zwischen den Windungen des Förderkanals 5 am zentralen perforierten Mantelrohr 4 plaziert sein. Die Düsen sind dann zum Beispiel auf einer Reihe angeordnet, welche sich innerhalb des zentralen Rohres ebenfalls schraubenlinienförmig nach oben windet, aber zwischen die Windungen des Förderkanals versetzt. Diese Düsen werden dann von einem Schlauch versorgt, der von oben oder unten in das Innere des zentralen Rohrs geführt ist und für jede Düse eine Abzweigung in Form eines T-Stückes aufweist, sodass wiederum sichergestellt ist, dass infolge des sich allseitig gleich ausbreitenden Druckes jede Düse gleichmässig mit Druck beaufschlagt wird. Die Reinigungsflüssigkeit wird dann im allgemeinen radial in den Raum zwischen dem zentralen Rohr und dem Mantelrohr hinausgespritzt, wobei im Falle von Rotationsdüsen der umlaufende Strahl einen Kegelmantel überstreicht. Es ist jedoch auch möglich, die Zufuhr der Reinigungsflüssigkeit mittels mehrerer gerader Rohrstücke zu realisieren, die längs der Innenwand des zentralen Rohres verlaufen, sodass die Düsen direkt oder über kleine Rohrabschnitte durch die Wand des zentralen Rohres von aussen in diese Zufuhrrohre eingeschraubt sind. Auch ein zentrales, gross dimensioniertes Stahlrohr längs der Achse des zentralen Rohres 4 ist als Zufuhrrohr denkbar. In diesem Fall werden alle Düsen über Nippel direkt in dieses zentrale Zufuhrrohr eingeschraubt.

Nach dem Waschvorgang gilt es, den Schwingungsförderer rasch und gründlich zu trocknen. Erst dann nämlich ist er wieder einsatzbereit. Für das Trocknen kann in einer ersten Variante anstatt Reinigungsflüssigkeit warme Luft durch den Schwingungsförderer geblasen werden. Hierbei kann diese warme Luft den genau gleichen Weg nehmen wie zuvor die Reinigungsflüssigkeit, das heisst, der eingesetzte Föhn wird an den Stutzen 22 angeschlossen.

In einer anderen Variante wird die Einschütt- 14 und Ausschüttgosse 15 mit je einer Kappe dicht verschlossen, und auch das Ablauf- und Staubabsaugrohr 12 wird je mit einer Verschlusskappe abgedichtet. Hernach wird mittels einer Saugpumpe oder eines Industriestaubsaugers ein Teilvakuum im Innern des Schwingungsförderes erstellt, welches der Verdampfung der Flüssigkeitsreste förderlich ist. Zur weiteren Unterstützung des Trocknungsvorgangs können auch Heizmittel im Innern des Schwingungsförderers angeordnet sein, zum Beispiel in Form eines elektrischen Heizdrahtes, der sich zwischen den Förderkanalwindungen ebenfalls um das zentrale Rohr windet, oder indem elektrische Heizmittel im Innern des zentralen Rohres angeordnet sind, welche das ganze zentrale Rohr zur Unterstützung der Trocknung im Teilvakuum aufheizt.

## Patentansprüche

1. Selbstreinigender Schwingungsförderer zum Entgraten, Entstauben und Hochfördern von Kleinteilen, insbesondere von Pillen und Tabletten, mit einem vertikalen Rohr (4) und einem darum schraubenlinienförmig nach oben gewundenen Förderkanal (5) mit zugehöriger elektromagnetischer Schwingungseinheit (1), sowie den Förderkanal (5) von aussen umfassendem Mantelrohr (7), ***dadurch gekennzeichnet*, dass** der Raum zwischen dem vertikalen Rohr (4) und dem Mantelrohr (7) mit mehreren, das vertikale Rohr (4) von innen oder das Mantelrohr (7) von aussen durchsetzenden Düsen (19) mit einem flüssigen Waschmittel mittels einer zugehörigen Förderpumpe unter Druck bespritzbar ist, und der Raum auf seiner Unterseite einen Sammelteller (20) und einen Sammelkanal mit Ablauf aufweist, und dass das Innere des Schwingungsförderers zum Trocknen entweder durch Anschluss eines Föhns mit Warmluft durchströmbar ist oder nach Verschliessen aller Zu- und Abläufe durch Anschluss einer Saugpumpe unter ein Teilvakuum setzbar ist.

2. Selbstreinigender Schwingungsförderer nach Anspruch 1, ***dadurch gekennzeichnet*, dass** aussen längs auf das Mantelrohr (7) Halbrohre (21) dichtend aufgesetzt sind, und aus dem Raum zwischen dem Inneren der Halbrohre (21) und dem Mantelrohr (7) eine Reihe von Düsen (19) das Mantelrohr (7) gegen innen durchsetzen, sowie dass zum Waschen das Innere der Halbrohre (21) mit einem flüssigen Waschmittel unter Druck beaufschlagbar ist.

3. Selbstreinigender Schwingungsförderer nach Anspruch 1, ***dadurch gekennzeichnet*, dass** das Mantelrohr (7) an seinem unteren Ende einen Flansch (9) aufweist, welcher auf in seiner dem Mantelrohr (7) abgewandten Seite eine Kreisnut (24) aufweist, sowie längs des Mantelrohres (7) auf seiner Aussenseite aufgesetzte Halbrohre (21), indem deren Längsränder dicht mit der Mantelrohroberfläche verbunden sind und das Innere dieser Halbrohre (21) über je eine axiale Bohrung (28) im Flansch (9) mit dessen Kreisnut (24) kommuniziert, sowie dass radiale Bohrungen im Mantelrohr (7) vorhanden sind, welche mit dem Innern der Halbrohre (21) kommunizieren, und dass von der Innenseite des Mantelrohres (7) her Düsen (19) in diese Bohrungen eingesetzt sind, weiter dass wenigstens eines der Halbrohre (21) einen Anschluss-Stutzen (22) zum Einpumpen von flüssigem Waschmittel aufweist.

4. Selbstreinigender Schwingungsförderer nach Anspruch 3, ***dadurch gekennzeichnet*, dass** das Mantelrohr (7) in mehrere Abschnitte (71-74) aufgeteilt ist, von denen jeder an den mit einem benachbarten, zu verbindenden Abschnitt einen Flansch (16,17) aufweist, wobei wenigstens der eine Flansch (17) von zwei zu verbindenden Flaschen (16,17) auf seiner Aussenseite eine Kreisnut (29) mit beidseits der Kreisnut (29) verlaufendem O-Ring aufweist, und die Flansche (16,17) axiale Bohrungen aufweisen, sodass deren Aussenseite an den Stellen der Mündungen der Halbrohre (21) an die Flasche (16,17) mit dem Inneren der Halbrohre (21) kommuniziert.

5. Selbstreinigender Schwingungsförderer nach einem der Ansprüche 2 bis 4, ***dadurch gekennzeichnet*, dass** die aufgesetzten Halbrohre (21) an ihren oberen Enden dichtend von einem auf das Mantelrohr aufsetzbaren Deckel (8) verschlossen sind.

6. Selbstreinigender Schwingungsförderer nach einem der Ansprüche 1 bis 5, ***dadurch gekennzeichnet***, das vertikale zentrale Rohr (4) dichtend auf einem Sammelteller (20) steht, der einen geringeren Durchmesser aufweist als der Innendurchmesser des Mantelrohres (7), und dass unterhalb des Sammeltellers (20) ein Ringkanal angeordnet ist, welcher längs der lichten Weite zwischen dem Rand des Sammeltellers (20) und der Mantelrohrwand unterhalb des Mantelrohrs (7) verläuft und den Sammelteller (20) gegen innen und das Mantelrohr (7) gegen aussen überragt und einen Ablauf aufweist, sodass innerhalb des Mantelrohrs (7) nach unten fliessende Flüssigkeit von diesem Ringkanal aufgefangen und über den Ablauf nach aussen geleitet wird.

7. Selbstreinigender Schwingungsförderer nach einem der Ansprüche 1 bis 6, ***dadurch gekennzeichnet*, dass** der Zu-und Ablauf für die Kleinteilen durch eine Einschütt- (14) und eine Ausschüttgosse (15) gebildet sind und dass die Einschütt- (14) und Ausschüttgosse (15) wie auch das Ablauf- und Staubabsaugrohr (12) mittels einer Kappe dicht verschliessbar ist, und zwecks Trocknung des Schwingungsförderers eine Saugpumpe am Anschluss-Stutzen (22) für das flüssige Waschmittel anschliessbar ist, mittels derer der gewaschene Innenraum unter ein Teilvakuum setzbar ist, zur Förderung der Verdunstung der nach dem Waschen in ihm verbliebenen Reinigungsflüssigkeit.

8. Selbstreinigender Schwingungsförderer nach einem der Ansprüche 1 bis 6, ***dadurch gekennzeichnet*, dass** zwecks Trocknung des Schwingungsförderers über den Anschluss-Stutzen (22) Warmluft mittels eines Föhns in das Innere zwischen Mantelrohr (7) und zentralem Rohr (4) einblasbar ist, zur Förderung der Verdunstung der nach dem Waschen in ihm verbliebenen Reinigungsflüssigkeit.

9. Selbstreinigender Schwingungsförderer nach einem der Ansprüche 2 bis 8, ***dadurch gekennzeichnet*, dass** das Mantelrohr (7) aus Plexiglas gefertigt ist und die Halbrohre (21) aus Plexiglas von aussen dichtend auf das Mantelrohr (7) geklebt sind.

10. Selbstreinigender Schwingungsförderer nach einem der Ansprüche 1 bis 9, ***dadurch gekennzeichnet*, dass** die Düsen (19) Rotationsdüsen mit wenigstens einer schräg zur Düsenachse austretenden Mündung sind, welche Rotationsdüsen kraft der eingespritzten Reinigungsflüssigkeit in Rotation versetzbar sind, sodass die Reinigungsflüssigkeit kegelmantelförmig in den Innenraum des Schwingungsförderers einspritzbar ist und somit eine Beaufschlagung aller Teileseiten im Innenraum des Schwingungsförderers erfolgt.

## Claims

1. A self-cleaning oscillation conveyor for deburring, dedusting and upwardly conveying small parts, in particular pills and tablets, with a vertical tube (4) and a conveyor channel (5) which is wound around this upwards in a helical manner and with an associated electromagnetic oscillation unit (1), as well as a casing tube (7) encompassing the conveyor channel (5) from the outside, **characterised in that** the space between the vertical tube (4) and the casing tube (7) may be sprayed with a liquid washing agent under pressure by way of an associated conveyor pump by several nozzles (19) passing through the vertical tube (4) from the inside or the casing tube (7) from the outside, and the space on the lower side comprises a collection plate (20) and a collection channel with a discharge, and that the inside of the oscillation conveyor for drying may either be flown through with warm air by connection of an air-blower, or after closure of all supply and discharges may be set under a part vacuum by connection to a suction pump.

2. A self-cleaning oscillation conveyor according to claim 1, **characterised in that** semi-tubes are sealingly placed along the casing tube (7) on the outside and that from the space between the inside of the semi-tubes (21) and the casing tube (7) a series of nozzles (19) pass through the casing tube (7) towards the inside, as well as that for washing the inside of the semi-tubes (21) may be impinged with a liquid washing means under pressure.

3. A self-cleaning oscillation conveyor according to claim 1, **characterised in that** the casing tube (7) at its lower end comprises a flange (9) which on its side distant to the casing tube (7) comprises a circular groove (24) in this side, as well semi-tubes (21) placed along the casing tube (7) on its outer side by way of sealingly connecting their longitudinal edges to the casing tube surface, and the inside of these semi-tubes (21) via in each case one axial bore (28) in the flange (9) communicates with the circular groove (24) thereof, as well as that radial bores are present in the casing tube (7) which communicate with the inside of the semi-tubes (21), and that nozzles (19) are placed into these bores from the inner side of the casing tube (7), further that at least one of the semi-tubes (21) comprises a connection terminal (22) for pumping in fluid washing agent.

4. A self-cleaning oscillation conveyor according to claim 3, **characterised in that** the casing tube (7) is divided up into several sections (71-74), of which each at the adjacent section to be connected comprises a flange (16, 17), wherein at least the one flange (17) of two flanges (16, 17) to be connected, on the outer side comprises a circular groove (29) with an O-ring running on both sides of the circular groove (29), and the flanges (16, 17) comprise axial bores so that their outer side at the locations of the openings of the semi-tubes (21) to the flange (16, 17) communicates with the inside of the semi-tubes (21).

5. A self-cleaning oscillation conveyor according to one of the claims 2 to 4, **characterised in that** the attached semi-tubes (21) at their upper ends are sealingly closed by a lid (8) which may be placed onto the casing tube.

6. A self-cleaning oscillation conveyor according to one of the claims 1 to 5, **characterised in that** the vertical central tube (4) sealingly stands on a collection plate (20) which has a smaller diameter than the inner diameter of the casing tube (7), and that below the collection plate (20) there is arranged an annular channel which runs along the clear width between the edge of the collection plate (20) and the casing tube wall below the casing tube (7) and projects beyond the collection plate (2) to the inside and the casing tube (7) to the outside and comprises a discharge so that fluid flowing downwards within the casing tube (7) is captured by this annular channel and is led to the outside via the discharge.

7. A self-cleaning oscillation conveyor according to one of the claims 1 to 6, **characterised in that** the in- and oulet for the small parts is formed by a filling duct (14) and an emptying duct (15) and that the filling duct (14) and the emptying duct (15) as well as the discharge and duct suction tube (12) may be sealingly closed by way of a cap, and for the purpose of drying the oscillation conveyor a suction pump may be connected on the connection terminal (22) for the liquid washing agent by way of which the washed inner space may be set under a part vacuum, for conveying the vapour of the cleaning fluid remaining in it after the washing.

8. A self-cleaning oscillation conveyor according to one of the claims 1 to 6, **characterised in that** for the purpose of drying the oscillation conveyor, via the connection terminal (22) warm air may be blown into the inside between the casing tube (7) and the central tube (4) by way of an air-blower, for conveying the vapour of the cleaning fluid remaining in it after the washing.

9. A self-cleaning oscillation conveyor according to one of the claims 2 to 8, **characterised in that** the casing tube (7) is manufactured of plexiglass and the semi-tubes (21) of plexiglass are sealingly adhesed onto the casing tube (7) from the outside.

10. A self-cleaning oscillation conveyor according to one of the claims 1 to 9, **characterised in that** the nozzles (19) are rotation nozzles with at least one opening exiting obliquely to the nozzle axis, said rotation nozzles able to be set into rotation by the force of the sprayed-in cleaning fluid so that the cleaning fluid is sprayed into the inner space of the oscillation conveyor in the form of the envelope of a cone, and thus there is effected an impingement of all sides of the parts in the inner space of the oscillation conveyor.

## Revendications

1. Convoyeur oscillant et auto-nettoyant pour ébavurer, dépoussiérer et élever des petites pièces, en particulier des pilules et des comprimés, comportant un tube vertical (4) et un canal hélicoïdal de convoyage ou transport (5), remontant autour de ce tube et une unité électromagnétique oscillante (1) correspondante, ainsi qu'une chemise tubulaire (7) entourant de l'extérieur le canal de transport (5), ***caractérisé en ce que*** l'espace entre le tube vertical (4) et la chemise tubulaire (7) peut être arrosé par plusieurs buses (19), traversant soit le tube vertical (4) de l'intérieur, soit la chemise tubulaire (7) de l'extérieur, cet arrosage étant réalisé au moyen d'un liquide de lavage, injecté sous pression par une pompe d'alimentation correspondante, et que l'espace situé sur sa face inférieure comporte un plateau collecteur (20) et un canal collecteur, muni d'un dispositif d'évacuation, cependant que, pour le séchage, l'intérieur du convoyeur oscillant peut soit être traversé par de l'air chaud au moyen du raccordement d'un ventilateur à air chaud soit être mis sous vide partiel par le raccordement d'une pompe aspirante, une fois fermés tous les orifices d'alimentation et d'évacuation.

2. Convoyeur oscillant et auto-nettoyant suivant la revendication 1, ***caractérisé en ce qu'***à l'extérieur de la chemise tubulaire (7), des demi-tubes (21) sont appliqués en longueur jointivement sur celle-ci et qu'à partir de l'espace compris entre l'intérieur des demi-tubes (21) et la chemise tubulaire (7) une série de buses (19) traversent la chemise tubulaire (7) vers l'intérieur, cependant que, pour le lavage, l'intérieur des demi-tubes (21) peut être alimenté avec un liquide de lavage sous pression.

3. Convoyeur oscillant et auto-nettoyant suivant la revendication 1, ***caractérisé en ce que*** la chemise tubulaire (7) présente à son extrémité inférieure une bride (9), qui comporte dans sa face opposée à la chemise tubulaire (7) une rainure circulaire (24) ainsi que, le long de la chemise tubulaire (7), des demi-tubes (21) disposés sur sa surface extérieure, **en ce que** les bords longitudinaux de ces demi-tubes (21) sont réunis jointivement à la surface de la chemise tubulaire et l'intérieur de ces demi-tubes (21) communiquant pour chacun par un conduit axial (28) pratiqué dans la bride (9) avec sa rainure circulaire (24), et **en ce qu'**il existe dans la chemise tubulaire (7) des conduits radiaux communiquant avec l'intérieur des demi-tubes (21), cependant qu'à partir de l'intérieur de la chemise tubulaire (7), des buses (19) sont insérées dans ces conduits et que, par ailleurs, au moins un des demi-tubes (21) présente une tubulure de raccordement (22) pour l'alimentation en liquide de lavage sous pression.

4. Convoyeur oscillant et auto-nettoyant suivant la revendication 3, ***caractérisé en ce que*** la chemise tubulaire (7) est répartie eu plusieurs tronçons (71 à 74), dont chacun présente, dans la zone de raccordement avec un tronçon voisin, une bride (16, 17), cependant que, sur deux brides (16, 17) à raccorder, une au moins (17) comporte sur sa face extérieure une rainure circulaire (29), munie d'un joint torique sur chacun de ses deux côtés et les brides (16, 17) présentant des conduits axiaux, de sorte que leur face extérieure communique, aux endroits des embouchures des demi-tubes (21), sur les flasques (16, 17) avec l'intérieur des demi-tubes (21).

5. Convoyeur oscillant et auto-nettoyant suivant une des revendications 2 à 4, ***caractérisé en ce que*** les demi-tubes (21) appliqués sont fermés à leurs extrémités supérieures par un couvercle (8), applicable jointivement sur la chemise tubulaire.

6. Convoyeur oscillant et auto-nettoyant suivant une des revendications 1 à 5, ***caractérisé en ce que*** le tube vertical central (4) est installé jointivement sur un plateau collecteur (20), présentant un diamètre plus faible que le diamètre intérieur de la chemise tubulaire (7) et qu'il est disposé en dessous du plateau collecteur (20) un canal annulaire, qui s'étend le long de la largeur intérieure comprise entre le bord du plateau collecteur (20) et la paroi de la chemise tubulaire au-dessous de celle-ci, cependant que ce canal dépasse le plateau collecteur (20) vers l'intérieur et la chemise tubulaire (7) vers l'extérieur et présente un dispositif d'évacuation, de sorte que du liquide s'écoulant vers le bas à l'intérieur de la chemise tubulaire (7) est recueilli par ce canal annulaire et qu'il est conduit à l'extérieur par le dispositif d'évacuation.

7. Convoyeur oscillant et auto-nettoyant suivant une des revendications 1 à 6, ***caractérisé en ce que*** les dispositifs d'alimentation et d'évacuation pour les petites pièces sont constitués par un entonnoir (14) et un déversoir (15) et que l'entonnoir (14) et le déversoir (15) ainsi que le tube d'évacuation et d'aspiration des poussières (12) peuvent être fermés jointivement au moyen d'une calotte, cependant que, pour le séchage du convoyeur oscillant, une pompe aspirante peut être raccordée à la tubulure de raccordement (22) pour le liquide de lavage, afin de permettre la mise sous vide partiel de l'espace intérieur lavé, et ainsi d'y activer l'évaporation du liquide résiduel après le lavage.

8. Convoyeur oscillant et auto-nettoyant suivant une des revendications 1 à 6, ***caractérisé en ce que**,* pour le séchage du convoyeur oscillant, de l'air chaud peut être insufflé par la tubulure de raccordement (22), au moyen d'un ventilateur à air chaud, dans l'espace intérieur compris entre la chemise tubulaire (7) et le tube central (4), afin d'y activer l'évaporation du liquide résiduel après le lavage.

9. Convoyeur oscillant et auto-nettoyant suivant une des revendications 2 à 8, ***caractérisé en ce que*** la chemise tubulaire (7) est réalisée en plexiglas et que les demi-tubes (21) en plexiglas sont collés jointivement de l'extérieur sur la chemise tubulaire (7).

10. Convoyeur oscillant et auto-nettoyant suivant une des revendications 1 à 9, ***caractérisé en ce que*** les buses (19) sont des buses de rotation, comportant au moins une embouchure débouchant de biais par rapport à l'axe de buse, ces buses de rotation pouvant être mise en rotation sous l'action du liquide de nettoyage injecté, de sorte que les jets de ce liquide peuvent être injectés dans l'intérieur du convoyeur oscillant en s'inscrivant dans une enveloppe de cône, permettant ainsi un impact des jets sur toutes les parties des pièces à l'intérieur du convoyeur oscillant.
